# EUROPÄISCHE PATENTANMELDUNG

(11) **EP 2 604 391 A1**
(43) Veröffentlichungstag der Anmeldung: **19.06.2013**
(21) Anmeldenummer: 11193754.6
(22) Anmeldetag: 15.12.2011
(51) Int. Cl.: B25C 5/11, B25C 5/16, F24D 3/14

(54) **Vorrichtung für die Bevorratung und Zuführung von Rohrhaltern zur Fixierung von Rohren**

(71) Anmelder: Roth Werke GmbH, 35232 Dautphetal (DE)
(72) Erfinder:
(74) Vertreter: Rohmann, Michael

(57) **Zusammenfassung**

Vorrichtung für die Bevorratung und Zuführung von Rohrhaltern zur Fixierung von Rohren (2) an einem Untergrund (3), wobei die Vorrichtung eine Stempeleinrichtung (4) mit einem zum Untergrund hin bewegbaren Stempel zum Einbringen der Rohrhalter in den Untergrund aufweist. Weiterhin ist an die Stempeleinrichtung ein Magazin (6) für die Aufnahme bzw. Bevorratung einer Mehrzahl von Rohrhaltern angeschlossen. Fernerhin ist ein Fußpedal (7) vorgesehen, durch dessen Betätigung der Stempel zum Einbringen eines Rohrhalters zum Untergrund hin bewegbar ist.

## Beschreibung

Die Erfindung betrifft eine Vorrichtung für die Bevorratung und Zuführung von Rohrhaltern, insbesondere von U-förmigen Rohrhaltern zur Fixierung von Rohren, insbesondere zur Fixierung von Heizrohren einer Fußbodenheizung an einem Untergrund, insbesondere an einer wärmeisolierenden Dämmschicht. Die Rohrhalter werden bei einer solchen Vorrichtung in der Regel mit einem vertikal bewegbaren Stempel in den Untergrund bzw. in die Dämmschicht eingestoßen und zwar mit den Spitzen ihrer U-Schenkel. Das Einstoßen der Rohrhalter erfordert einen gewissen Kraftaufwand.

Vorrichtungen der oben beschriebenen Art sind aus der Praxis in unterschiedlichen Ausführungsformen bekannt. Diese Vorrichtungen sind normalerweise mit einer mit dem Stempel verbundenen Basisstange ausgestattet, an deren oberen Ende ein Handgriff angeschlossen ist. Durch Betätigen bzw. Herunterdrücken dieses Handgriffes wird der Stempel vertikal nach unten bewegt und ein unterhalb des Stempels befindlicher U-förmiger Rohrhalter wird mit seinen U-Schenkeln in den Untergrund eingestoßen. Bei diesem Untergrund kann es sich beispielsweise um eine Dämmschicht aus geschäumtem Kunststoff handeln. Bei den bekannten Vorrichtungen wird in der Regel eine Mehrzahl von Rohrhaltern auf einer Magazinstange magaziniert und einer den Stempel aufweisenden Stempeleinrichtung zugeführt. Wenn ein Rohrhalter mit dem Stempel in den Untergrund eingestoßen wurde, wird ein weiterer Rohrhalter von der Magazinstange - normalerweise unter Einwirkung der Schwerkraft - in den Bereich unterhalb des Stempels nachgeführt. Anschließend kann dieser weitere Rohrhalter zur Fixierung eines Rohres in den Untergrund eingebracht werden. Bei der Rohrfixierung wird die Stempeleinrichtung über einem zu fixierenden Rohr positioniert und dann wird ein Rohrhalter - das Rohr übergreifend - in den Untergrund eingebracht. Dabei muss darauf geachtet werden, dass das Rohr beim Einstoßen eines Rohrhalters möglichst nicht beschädigt wird. - Das Betätigen bzw. Herunterdrücken des Handgriffes erfordert bei den meisten bekannten Vorrichtungen einen relativ hohen Kraftaufwand. Das gilt vor allem für die Fixierung von Rohren an einem Untergrund höherer Dichte, beispielsweise an einer Dämmschicht auf Basis von Holzfasern. Der verhältnismäßig hohe Kraftaufwand führt insbesondere bei längerem Gebrauch einer solchen Vorrichtung zur Ermüdung der Bedienungsperson, insbesondere im Handgelenkbereich. Weiterhin ist die Bedienung der Vorrichtungen über den Handgriff in engen Räumen oder unter Dachschrägen häufig schwierig. Das führt dazu, dass die Bedienperson eine unangenehme und oftmals auch ungesunde Körperhaltung einnehmen muss. Im Ergebnis sind viele der bekannten Vorrichtungen verbesserungsbedürftig.

Dementsprechend liegt der Erfindung das technische Problem zugrunde, eine Vorrichtung der eingangs genannten Art anzugeben, bei der die vorstehend beschriebenen Nachteile vermieden werden können.

Zur Lösung dieses technischen Problems lehrt die Erfindung eine Vorrichtung für die Bevorratung und Zuführung von Rohrhaltern zur Fixierung von Rohren - insbesondere von Heizrohren einer Fußbodenheizung - an einem Untergrund, insbesondere an einer wärmeisolierenden Dämmschicht,
wobei die Vorrichtung eine Stempeleinrichtung mit einem zum Untergrund hin bewegbaren Stempel zum Einbringen der Rohrhalter in den Untergrund aufweist,
wobei weiterhin an die Stempeleinrichtung ein Magazin für die Aufnahme bzw. Bevorratung einer Mehrzahl von Rohrhaltern angeschlossen ist
und wobei fernerhin ein Fußpedal vorgesehen ist, durch dessen Betätigung der Stempel zum Einbringen eines Rohrhalters in den Untergrund zum Untergrund hin bewegbar ist.

Es liegt im Rahmen der Erfindung, dass das Fußpedal durch den Fuß einer Bedienungsperson betätigt wird, und zwar zweckmäßigerweise durch Herunterdrücken des Fußpedals in Richtung Untergrund. Durch Betätigung des Fußpedals wird der Stempel vertikal nach unten bewegt und ein unterhalb des Stempels angeordneter Rohrhalter wird dadurch zur Fixierung eines unterhalb der Vorrichtung angeordneten Rohres in den Untergrund eingestoßen. Bei dem Untergrund kann es sich beispielsweise um eine Dämmschicht auf Basis von geschäumtem Kunststoff handeln oder auch um eine Dämmschicht auf Basis von Holzfasern.

Das Magazin der erfindungsgemäßen Vorrichtung ist vorzugsweise als eine an der Stempeleinrichtung angeschlossene Magazinstange ausgebildet. Es liegt im Rahmen der Erfindung, dass es sich bei den Rohrhaltern um U-förmige Rohrhalter mit U-Basis und zwei daran angeschlossenen U-Schenkeln handelt. Die U-förmigen Rohrhalter werden zur Fixierung eines Rohres mit dem Stempel, das Rohr übergreifend, in den Untergrund eingestoßen, so dass die beiden U-Schenkel an beiden Seiten des Rohres angeordnet sind und die U-Basis über dem Rohr angeordnet ist bzw. auf dem Rohr aufliegt. Empfohlenermaßen bestehen die U-förmigen Rohrhalter aus Kunststoff. Die U-Schenkel weisen zweckmäßigerweise spitze Enden auf, mit denen die Rohrhalter in den Untergrund eingebracht bzw. eingestoßen werden. Bevorzugt ist an dem Ende jedes U-Schenkels zumindest ein Widerhaken zur Verhakung des Rohrhalters in dem Untergrund vorgesehen. Die U-Basis ist vorzugsweise gebogen bzw. teilkreisförmig gebogen ausgebildet und bevorzugt an den Außendurchmesser der zu fixierenden Rohre angepasst. Es liegt im Rahmen der Erfindung, dass die zu fixierenden Rohre einen kreisförmigen bzw. einen im Wesentlichen kreisförmigen Querschnitt aufweisen.

Zweckmäßigerweise ist die Trittfläche des Fußpedals quer zur Bewegungsrichtung des Stempels angeordnet. Die Trittfläche bzw. die Oberseite des Fußpedals ist empfohlenermaßen profiliert ausgebildet. Es liegt im Rahmen der Erfindung, dass das Fußpedal plattenförmig mit einer oberseitigen Trittfläche ausgebildet ist. In der Montageposition der erfindungsgemäßen Vorrichtung mit auf dem Untergrund aufgestellter Stempeleinrichtung ist das Fußpedal im nicht betätigten Zustand zweckmäßigerweise horizontal oder im Wesentlichen horizontal angeordnet.

Vorzugsweise ist das Fußpedal im Bereich der bzw. auf Höhe der Stempeleinrichtung angeordnet und über zumindest ein Verbindungselement an den Stempel angeschlossen. Empfohlenermaßen ist das Fußpedal über das zumindest eine Verbindungselement unmittelbar an den Stempel angeschlossen bzw. mit dem Stempel verbunden. Bei dem Verbindungselement handelt es sich insbesondere um einen Verbindungsbolzen. Nach einer bevorzugten Ausführungsform der Erfindung ist das Fußpedal über zwei oder über zumindest zwei Verbindungselemente an den Stempel angeschlossen und vorzugsweise unmittelbar an den Stempel angeschlossen bzw. mit dem Stempel verbunden.

Gemäß empfohlener Ausführungsform der Erfindung weist die Stempeleinrichtung bzw. weist eine Wand der Stempeleinrichtung zumindest ein Langloch bzw. ein vertikales Langloch auf und das zumindest eine an den Stempel angeschlossene Verbindungselement durchgreift dann dieses Langloch. Bei zwei oder mehr derartiger Verbindungselemente ist zweckmäßigerweise eine entsprechende Anzahl von Langlöchern bzw. von vertikalen Langlöchern in der Stempeleinrichtung vorgesehen. Gemäß einer Ausführungsvariante der Erfindung wird die Erstreckung des Langloches bzw. der Langlöcher zum Untergrund hin mit der Maßgabe gewählt, dass die Bewegung des Fußpedals zum Untergrund hin begrenzt wird und das untere Ende des Langloches bzw. der Langlöcher einen Anschlag für das Verbindungselement bzw. für die Verbindungselemente bildet. Dadurch wird dann auch die vertikale Bewegung des Stempels nach unten hin begrenzt und durch diese Bewegungsbegrenzung kann insbesondere eine Beschädigung des zu fixierenden Rohres vermieden werden.

Nach besonders bevorzugter Ausführungsform der Erfindung ist das Fußpedal an zumindest ein in eine Stecköffnung des Stempels eingestecktes Verbindungselement angeschlossen, wobei diese Steckverbindung vorzugsweise als lösbare Steckverbindung ausgebildet ist. Zweckmäßigerweise ist das zumindest eine in die Stecköffnung des Stempels eingesteckte Verbindungselement unmittelbar mit dem Fußpedal verbunden. Wie oben bereits dargelegt, handelt es sich bei dem Verbindungselement bevorzugt um einen Verbindungsbolzen. Wenn nach bevorzugter Ausführungsform zwei oder mehr Verbindungselemente bzw. Verbindungsbolzen vorgesehen werden, so gelten die vorstehend beschriebenen Merkmale empfohlenermaßen für jedes Verbindungselement bzw. für jeden Verbindungsbolzen.

Es wurde bereits oben dargelegt, dass nach bewährter Ausführungsform das Magazin als an der Stempeleinrichtung angeschlossene Magazinstange ausgebildet ist, auf welcher Magazinstange die Rohrhalter magaziniert werden. Es hat sich als zweckmäßig erwiesen, dass das Fußpedal an der der Magazinstange gegenüberliegenden Seite der Stempeleinrichtung an der Stempeleinrichtung bzw. auf Höhe der Stempeleinrichtung angeordnet ist. In der Montageposition der erfindungsgemäßen Vorrichtung beträgt der Abstand des Fußpedals bzw. der Unterseite des Fußpedals zum Untergrund vorzugsweise 2 bis 20 cm und bevorzugt 3 bis 15 cm. - Eine Ausführungsvariante der Erfindung ist dadurch gekennzeichnet, dass das Fußpedal zumindest einen unterseitigen Begrenzungsfuß zur Begrenzung der Bewegung des Fußpedals zum Untergrund hin aufweist. Es liegt dabei im Rahmen der Erfindung, dass der zumindest eine Begrenzungsfuß aus der Unterseite des Fußpedals vorsteht. Durch die Begrenzung der Bewegung des Fußpedals wird auch die vertikale Bewegung des an das Fußpedal angeschlossenen Stempels begrenzt und auf diese Weise kann insbesondere eine Beschädigung eines zu fixierenden Rohres vermieden werden.

Nach besonders bevorzugter Ausführungsform der Erfindung ist an die Stempeleinrichtung der erfindungsgemäßen Vorrichtung eine Basisstange bzw. eine vertikale Basisstange angeschlossen, die in ihrem oberen Bereich bzw. an ihrem oberen Ende einen Handgriff aufweist. Bei Betätigung dieses Handgriffes bzw. beim Herunterdrücken dieses Handgriffes wird der Stempel zum Einstoßen eines Rohrhalters in den Untergrund zum Untergrund hin bewegt. Der Begriff "vertikale" Basisstange bezieht sich hier auf die Montageposition der Vorrichtung mit auf den Untergrund aufgesetzter Stempeleinrichtung. Das Fußpedal und der vorstehend beschriebene Handgriff können zweckmäßigerweise grundsätzlich einzeln bzw. separat betätigt werden. Eine sehr bevorzugte Ausführungsform der Erfindung ist dadurch gekennzeichnet, dass die Betätigung des Fußpedals zur Bewegung des Stempels durch die Betätigung des Handgriffes zur Bewegung des Stempels unterstützt wird oder umgekehrt. Die Betätigung des Fußpedals und/oder die Betätigung des Handgriffes kann insbesondere auch in Abhängigkeit von den Raumgegebenheiten und vor allem in Abhängigkeit von der Raumhöhe gewählt werden. So wird man bei niedrigen Einbauhöhen oder unter Dachschrägen eher das Fußpedal betätigen. Es liegt aber auch im Rahmen der Erfindung, dass vor allem zur Schonung der entsprechenden Gelenke der Bedienungsperson abwechselnd das Fußpedal und der Handgriff betätigt werden.

Eine empfohlene Ausführungsform der Erfindung ist dadurch gekennzeichnet, dass der Handgriff mit seinem einen Ende an die Basisstange angeschlossen ist und dass dieser Handgriff auf derselben Seite der Vorrichtung angeordnet ist wie das Fußpedal. Der Handgriff ist zweckmäßigerweise stabförmig bzw. linear ausgebildet und - wie dargelegt - mit seinem einen Ende an die Basisstange angeschlossen. Es liegt im Rahmen der Erfindung, dass der Handgriff in die gleiche Richtung weg von der Vorrichtung weist, wie das Fußpedal. Die vorstehend beschriebenen Anordnungen ermöglichen eine besonders einfache und problemlose Bedienung der erfindungsgemäßen Vorrichtung.

Nach einer bewährten Ausführungsform der Erfindung ist der Handgriff senkrecht bzw. im Wesentlichen senkrecht zu der Basisstange oder zumindest zu einem vertikalen Abschnitt der Basisstange angeordnet. Vorzugsweise ist die in Bezug auf die Längsrichtung des Handgriffes angeordnete Mitte des Handgriffes über bzw. zentralmittig über der Basisstange oder über einem vertikalen Abschnitt der Basisstange angeordnet. Der Begriff "vertikal" bezieht sich auch hier wieder auf die Montageposition der erfindungsgemäßen Vorrichtung mit auf dem Untergrund aufgesetzter Stempeleinrichtung. Die vorstehend beschriebene Anordnung des Handgriffes ermöglicht eine optimale Krafteinleitung über den Handgriff in den Stempel. Wie oben bereits dargelegt, ist der Handgriff vorzugsweise stabförmig bzw. linear ausgebildet.

Eine empfohlene Ausführungsform der Erfindung zeichnet sich dadurch aus, dass die Basisstange einen unteren vertikalen Abschnitt aufweist, der mit seinem unteren Ende an den Stempel angeschlossen ist und dass an das obere Ende des vertikalen Abschnitts ein abgebogener Abschnitt der Basisstange anschließt, an dessen oberem Ende der Handgriff angeschlossen ist. Zweckmäßigerweise ist der stabförmig ausgebildete Handgriff mit seinem einen Ende an diesem abgebogenen Abschnitt der Basisstange angeschlossen und bevorzugt ist die in Bezug auf die Längsrichtung des Handgriffes angeordnete Mitte des Handgriffes über bzw. zentralmittig über dem genannten unteren vertikalen Abschnitt der Basisstange angeordnet. Wie oben bereits dargelegt, wird dadurch eine optimale Krafteinleitung in den Stempel gewährleistet.

Eine besonders bevorzugte Ausführungsform der Erfindung ist dadurch gekennzeichnet, dass das Magazin bzw. die Magazinstange mit der Maßgabe ausgebildet ist, dass wahlweise Rohrhalter unterschiedlicher Größe und/oder unterschiedlicher Form aufgenommen bzw. bevorratet werden können. Es liegt im Rahmen der Erfindung, dass die Magazinstange zumindest eine Führungsschiene aufweist und dass die Breite der Führungsschiene in Abhängigkeit von der Größe der aufzunehmenden Rohrhalter variierbar ist. Eine besonders empfohlene Variante zeichnet sich dadurch aus, dass die Führungsschiene eine Basis-Führungsschiene mit einer Breite b₁ aufweist und wobei auf dieser Basis-Führungsschiene zumindest ein Führungsschienenaufsatz fixierbar ist, so dass die Führungsschiene nach dem Fixieren des Führungsschienenaufsatzes eine Breite b₂ aufweist, wobei die Breite b₂ größer ist als die Breite b₁. Zweckmäßigerweise ist der zumindest eine Führungsschienenaufsatz über eine Rastverbindung auf der Basis-Führungsschiene fixierbar. - Gemäß einer anderen Ausführungsvariante weist die Magazinstange einen Magazinträger auf, an dem eine Führungsschiene bzw. eine Basis-Führungsschiene auswechselbar fixiert ist, insbesondere angeschraubt ist. - Eine weitere Ausführungsvariante ist dadurch gekennzeichnet, dass die Magazinstange auf einer ersten Seite eine erste Führungsschiene bzw. Basis-Führungsschiene aufweist und auf einer zweiten Seite eine zweite Führungsschiene bzw. Basis-Führungsschiene aufweist und dass die Magazinstange wahlweise mit ihrem einen Ende oder mit ihrem anderen Ende an die Stempeleinrichtung anschließbar ist, so dass entweder die erste Führungsschiene bzw. Basis-Führungsschiene oder die zweite Führungsschiene bzw. Basis-Führungsschiene für die Zuführung von Rohrhaltern zur Verfügung steht. Es liegt dabei im Rahmen der Erfindung, dass die erste Führungsschiene eine von der Breite b der zweiten Führungsschiene abweichende Breite b aufweist.

Der Erfindung liegt die Erkenntnis zugrunde, dass mit der erfindungsgemäßen Vorrichtung eine optimale Krafteinleitung und/oder Kraftverteilung beim Bewegen des Stempels zum Einstoßen eines Rohrhalters gegeben ist. Besondere Vorteile bietet dabei eine Vorrichtung, die sowohl das Fußpedal als auch den Handgriff aufweist. Dadurch wird eine besondere Flexibilität und Variabilität im Hinblick auf verschiedene Raumgegebenheiten bzw. Raumhöhen gewährleistet. Die erfindungsgemäße Vorrichtung ist bequem bedienbar und ermöglicht es einer Bedienungsperson angenehmere Körperhaltungen bei der Bedienung der Vorrichtung einzunehmen als bei den aus dem Stand der Technik bekannten Vorrichtungen. Mit Hilfe des erfindungsgemäßen Fußpedals kann auch ein Einstoßen von Rohrhaltern in einen dichteren Untergrund einfach und problemlos erfolgen, beispielsweise in eine Dämmschicht auf Basis von Holzfasern bzw. in eine Trittschalldämmschicht. Eine alternative Betätigung von Handgriff und Fußpedal bringt auch gesundheitliche Vorteile für die Bedienungsperson mit sich und gewährleistet insbesondere eine Schonung des Handgelenks und des Fußgelenks. Es ist auch darauf hinzuweisen, dass die erfindungsgemäße Vorrichtung mit relativ geringem Aufwand und vor allem mit geringem Kostenaufwand realisierbar ist.

Nachfolgend wird die Erfindung anhand einer lediglich ein Ausführungsbeispiel darstellenden Zeichnung näher erläutert. Es zeigen in schematischer Darstellung:
- Fig. 1a, b: eine perspektivische Darstellung einer erfindungsgemäßen Vorrichtung,

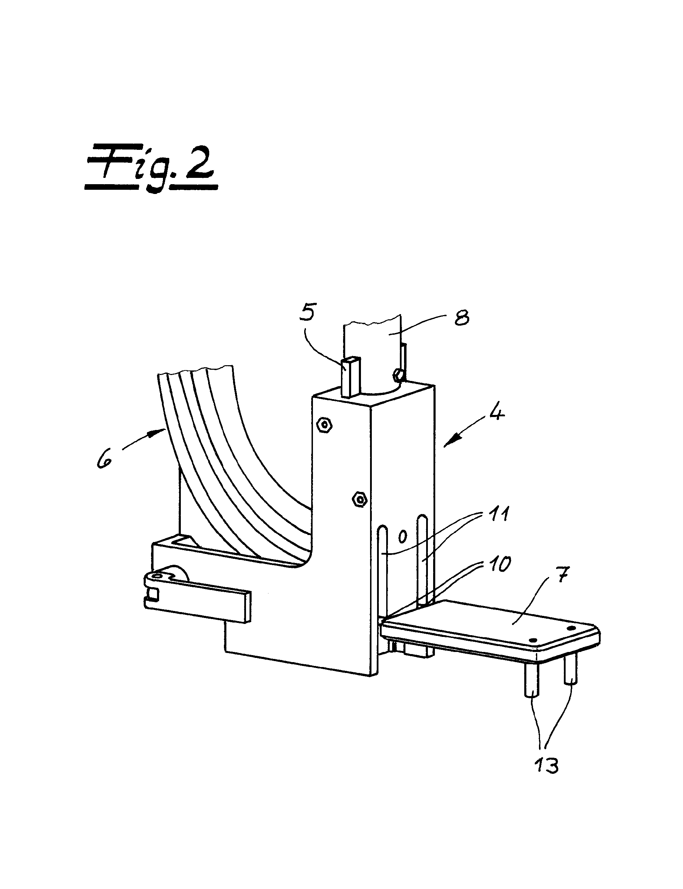

- Fig. 2: einen vergrößerten Ausschnitt A aus der Fig. 1,

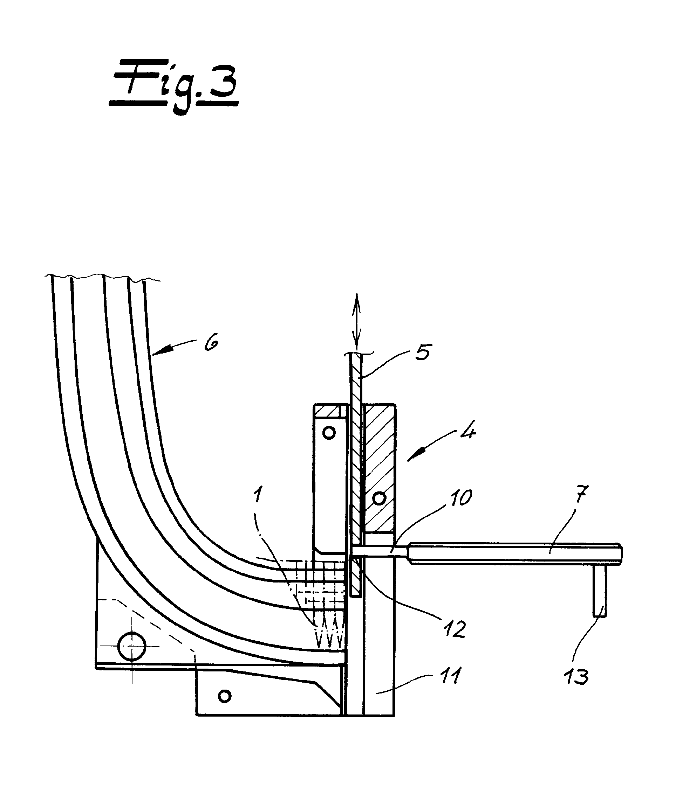

- Fig. 3: eine Seitenansicht des Gegenstandes nach Fig. 2 im Schnitt und
- Fig.4: eine Explosionsansicht des Fußpedals und des Stempels der erfindungsgemäßen Vorrichtung.

Die Figuren zeigen eine erfindungsgemäße Vorrichtung für die Bevorratung und Zuführung von U-förmigen Rohrhaltern 1 zur Fixierung von Rohren 2 bzw. Heizungsrohren an einem Untergrund 3, insbesondere an einer wärmeisolierenden Dämmschicht. Die Vorrichtung weist in ihrem unteren Bereich eine Stempeleinrichtung 4 mit einem zum Untergrund 3 hin bewegbaren Stempel 5 zum Einbringen der Rohrhalter 1 in den Untergrund 3 auf. Weiterhin ist im Ausführungsbeispiel nach den Figuren an die Stempeleinrichtung 4 ein als Magazinstange 6 ausgebildetes Magazin für die Aufnahme und Zuführung einer Mehrzahl von Rohrhaltern 1 angeschlossen. Im Ausführungsbeispiel ist im Bereich der Stempeleinrichtung 4 bzw. auf der Höhe der Stempeleinrichtung 4 ein Fußpedal 7 vorgesehen, durch dessen Betätigung der Stempel 5 zum Einbringen eines Rohrhalters 1 in den Untergrund 3 zum Untergrund 3 hin bewegbar ist. Das Fußpedal 7 wird von oben durch den Fuß einer nicht dargestellten Bedienungsperson betätigt bzw. zum Untergrund 3 hin heruntergedrückt.

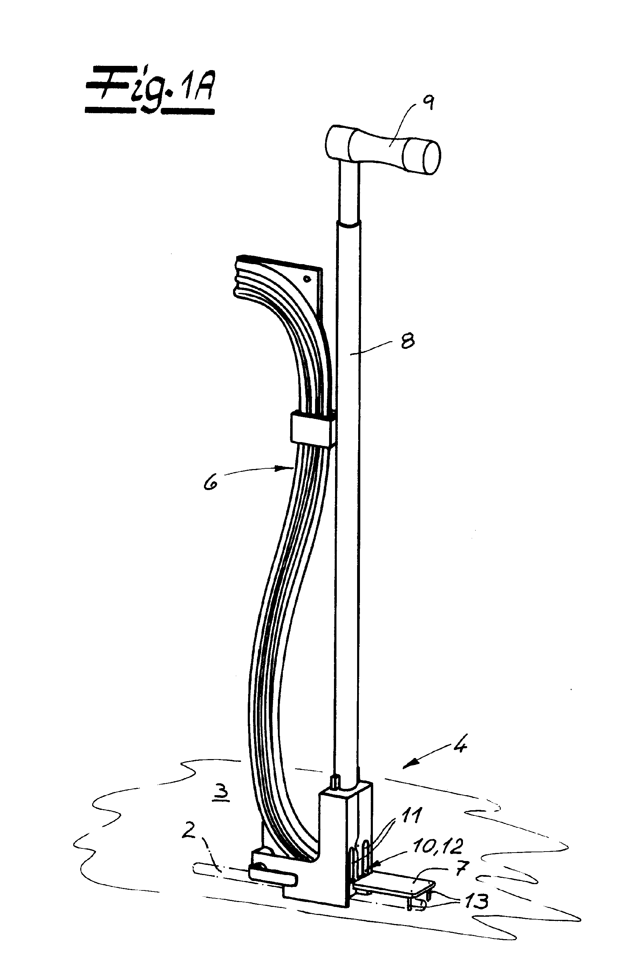

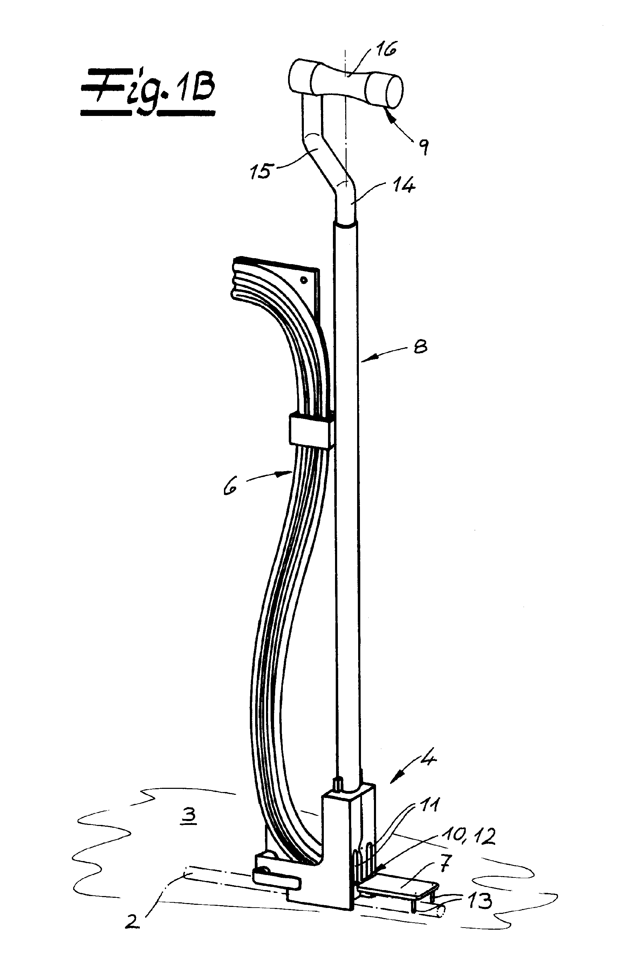

Im dargestellten Ausführungsbeispiel (siehe insbesondere Fig. 1) weist die Vorrichtung eine an die Stempeleinrichtung 4 bzw. an den Stempel 5 angeschlossene Basisstange 8 auf. An dem oberen Ende dieser Basisstange 8 ist ein Handgriff 9 angeschlossen und bei Betätigung dieses Handgriffes 9 bzw. beim Herunterdrücken dieses Handgriffes 9 wird ebenfalls der Stempel 6 zum Einbringen eines Rohrhalters 1 in den Untergrund 3 zum Untergrund hin bewegt. Grundsätzlich können das Fußpedal 7 und der Handgriff 9 einzeln bzw. separat betätigt werden. Es ist aber auch möglich, dass die Betätigung des Fußpedals 7 zur Bewegung des Stempels 5 durch die Betätigung des Handgriffes 9 unterstützt wird oder umgekehrt.

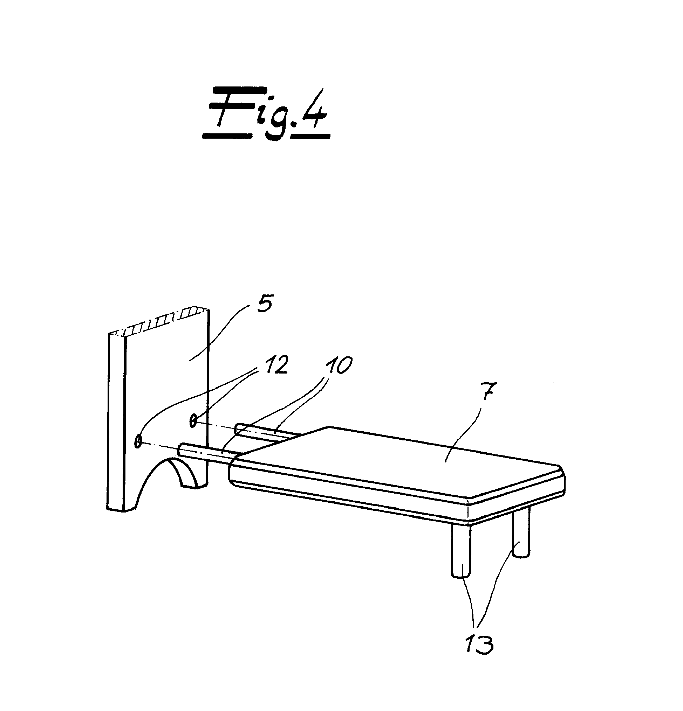

Im Ausführungsbeispiel nach den Figuren ist das auf Höhe der Stempeleinrichtung 4 angeordnete Fußpedal 7 über zwei als Verbindungsbolzen 10 ausgebildete Verbindungselemente unmittelbar an den Stempel 5 der Stempeleinrichtung 4 angeschlossen. Die Verbindungsbolzen 10 durchgreifen dabei zwei in der Wand der Stempeleinrichtung 4 vorgesehene vertikale Langlöcher 11. Insbesondere in der Fig. 4 ist erkennbar, dass die beiden unmittelbar an das Fußpedal 7 angeschlossenen Verbindungsbolzen 10 in zwei in dem Stempel 5 vorgesehene Stecköffnungen 12 eingesteckt werden. Diese Steckverbindung ist vorzugsweise als lösbare Steckverbindung realisiert. Das ermöglicht ein einfaches Montieren und Demontieren des Fußpedals 7. Bevorzugt und im Ausführungsbeispiel nach den Figuren ist das Fußpedal 7 im Übrigen an der der Magazinstange 6 gegenüberliegenden Seite der Stempeleinrichtung 4 an der Stempeleinrichtung 4 angeordnet. Im Ausführungsbeispiel weist das Fußpedal 7 zwei Begrenzungsfüße 13 auf, die die Bewegung des Fußpedals 7 zum Untergrund 3 hin begrenzen. Auf diese Weise wird auch die vertikale Bewegung des Stempels 5 begrenzt und es können somit Beschädigungen des zu fixierenden Rohres 2 vermieden werden.

Im Ausführungsbeispiel ist der Handgriff 9 stabförmig bzw. linear ausgebildet und ist mit seinem einen Ende an die Basisstange 8 angeschlossen. Empfohlenermaßen und im Ausführungsbeispiel ist der Handgriff 9 dabei auf derselben Seite der Vorrichtung angeordnet wie das Fußpedal 7. Der Handgriff 9 weist also in die gleiche Richtung wie das Fußpedal 7 weg von der erfindungsgemäßen Vorrichtung. Durch diese Anordnung von Fußpedal 7 einerseits und Handgriff 9 andererseits wird eine besonders einfache und problemlose Bedienung der erfindungsgemäßen Vorrichtung gewährleistet.

Im Ausführungsbeispiel nach Fig. 1a ist der Handgriff 9 senkrecht zu einer insgesamt vertikalen Basisstange 8 angeordnet. Im Ausführungsbeispiel gemäß Fig. 1b weist die Basisstange 8 dagegen lediglich einen unteren vertikalen Abschnitt 14 auf, der mit seinem unteren Ende an die Stempeleinrichtung 4 bzw. an den Stempel 5 angeschlossen ist. An das obere Ende des vertikalen Abschnitts 14 schließt ein abgebogener bzw. gebogener Abschnitt 15 der Basisstange 8 an, an dessen oberem Ende der Handgriff 9 angeschlossen ist. Bevorzugt und im Ausführungsbeispiel nach Fig. 1b ist die in Bezug auf die Längsrichtung des Handgriffes 9 gesehene Mitte 16 des Handgriffes 9 über bzw. zentralmittig über dem unteren vertikalen Abschnitt 14 der Basisstange 8 angeordnet. Auf diese Weise kann eine optimale Krafteinleitung über den Handgriff 9 in den Stempel 5 erfolgen. Grundsätzlich könnte auch bei der Ausführungsform gemäß Fig. 1a der Handgriff 9 mittig über der insgesamt vertikalen Basisstange 8 angeschlossen bzw. angeordnet sein.

## Patentansprüche

1. Vorrichtung für die Bevorratung und Zuführung von Rohrhaltern (1) zur Fixierung von Rohren (2), insbesondere von Heizrohren einer Fußbodenheizung an einem Untergrund (3), insbesondere an einer wärmeisolierenden Dämmschicht,
wobei die Vorrichtung eine Stempeleinrichtung (4) mit einem zum Untergrund (3) hin bewegbaren Stempel (5) zum Einbringen der Rohrhalter (1) in den Untergrund (3) aufweist,
wobei weiterhin an die Stempeleinrichtung (4) ein Magazin für die Aufnahme bzw. Bevorratung einer Mehrzahl von Rohrhaltern (1) angeschlossen ist
und wobei fernerhin ein Fußpedal (7) vorgesehen ist, durch dessen Betätigung der Stempel (5) zum Einbringen eines Rohrhalters (1) zum Untergrund (3) hin bewegbar ist.

2. Vorrichtung nach Anspruch 1, wobei das Fußpedal (7) im Bereich der bzw. auf Höhe der Stempeleinrichtung (4) angeordnet ist und über zumindest ein Verbindungselement an den Stempel (5) angeschlossen ist.

3. Vorrichtung nach Anspruch 2, wobei die Stempeleinrichtung (4) zumindest ein Langloch (11) aufweist und wobei das zumindest eine an den Stempel (5) angeschlossene Verbindungselement das Langloch (11) durchgreift.

4. Vorrichtung nach einem der Ansprüche 1 bis 3, wobei das Fußpedal (7) an zumindest ein in eine Stecköffnung (12) des Stempels (5) eingestecktes Verbindungselement angeschlossen ist, wobei diese Steckverbindung vorzugsweise als lösbare Steckverbindung ausgebildet ist.

5. Vorrichtung nach einem der Ansprüche 1 bis 4, wobei das Fußpedal (7) an der dem Magazin bzw. der Magazinstange (6) gegenüberliegenden Seite der Stempeleinrichtung (4) an der Stempeleinrichtung (4) angeordnet ist.

6. Vorrichtung nach einem der Ansprüche 1 bis 5, wobei das Fußpedal (7) zumindest einen Begrenzungsfuß (13) zur Begrenzung der Bewegung des Fußpedals (7) zum Untergrund (3) hin aufweist.

7. Vorrichtung nach einem der Ansprüche 1 bis 6, wobei an die Stempeleinrichtung (4) eine Basisstange (8) angeschlossen ist, die in ihrem oberen Bereich bzw. die an ihrem oberen Ende einen Handgriff (9) aufweist und wobei bei Betätigung des Handgriffes (9) der Stempel (5) zum Einbringen eines Rohrhalters (1) in den Untergrund (3) zum Untergrund hin bewegbar ist.

8. Vorrichtung nach Anspruch 7, wobei die Betätigung des Fußpedals (7) durch die Betätigung des Handgriffes (9) unterstützbar ist oder umgekehrt.

9. Vorrichtung nach einem der Ansprüche 7 oder 8, wobei der Handgriff (9) mit seinem einen Ende an die Basisstange (8) angeschlossen ist und wobei der Handgriff (9) auf derselben Seite der Vorrichtung angeordnet ist wie das Fußpedal (7).

10. Vorrichtung nach einem der Ansprüche 7 bis 9, wobei der Handgriff (9) senkrecht bzw. im Wesentlichen senkrecht zu der Basisstange (8) oder zumindest zu einem vertikalen Abschnitt (14) der Basisstange (8) angeordnet ist und wobei die in Bezug auf die Längsrichtung des Handgriffes (9) gesehene Mitte des Handgriffes (9) über bzw. zentralmittig über der Basisstange (8) oder über dem vertikalen Abschnitt (14) der Basisstange (8) angeordnet ist.

11. Vorrichtung nach einem der Ansprüche 7 bis 10, wobei die Basisstange (8) einen unteren vertikalen Abschnitt (14) aufweist, der mit seinem unteren Ende an die Stempeleinrichtung (4) bzw. an den Stempel (5) angeschlossen ist und wobei an das obere Ende des vertikalen Abschnitts (14) ein abgebogener bzw. gebogener Abschnitt (15) der Basisstange (8) anschließt, an dessen oberem Ende der Handgriff (9) angeschlossen ist.

12. Vorrichtung nach einem der Ansprüche 1 bis 11, wobei das Magazin bzw. die Magazinstange (6) mit der Maßgabe ausgebildet ist, dass wahlweise Rohrhalter (1) unterschiedlicher Größe und/oder unterschiedlicher Form aufgenommen bzw. bevorratet werden können.

13. Vorrichtung nach Anspruch 12, wobei die Magazinstange (6) zumindest eine Führungsschiene aufweist und wobei die Breite b der Führungsschiene in Abhängigkeit von der Größe der aufzunehmenden Rohrhalter (1) variierbar ist.

14. Vorrichtung nach Anspruch 13, wobei die Führungsschiene eine Basis-Führungsschiene mit einer Breite b₁ aufweist und wobei auf dieser Basis-Führungsschiene zumindest ein Führungsschienenaufsatz fixierbar ist, so dass die Führungsschiene nach dem Fixieren des Führungsschienenaufsatzes eine Breite b₂ aufweist, wobei die Breite b₂ größer ist als die Breite b₁.

15. Vorrichtung nach Anspruch 14, wobei der Führungsschienenaufsatz über eine Rastverbindung auf der Basis-Führungsschiene fixierbar ist.
